# EUROPÄISCHE PATENTSCHRIFT

(11) **EP 3 685 481 B1**
(45) Veröffentlichungstag und Bekanntmachung des Hinweises auf die Patenterteilung: **01.06.2022**
(21) Anmeldenummer: 18800552.4
(22) Anmeldetag: 02.11.2018
(51) Int. Cl.: H02B 13/055, H01H 33/22, H01H 33/56

(54) **VERFAHREN ZUM BEFÜLLEN EINES BEHÄLTERS SOWIE SERVICEGERÄT ZUM DURCHFÜHREN DES VERFAHRENS**
METHOD FOR FILLING A TANK AND SERVICE DEVICE TO IMPLEMENT THE METHOD
MÉTHODE DE REMPLISSAGE D'UNE CUVE ET DISPOSITIF POUR ÉXÉCUTER LA MÉTHODE

(30) Priorität: 17.11.2017 DE 102017220569
(43) Veröffentlichungstag der Anmeldung: 29.07.2020
(73) Patentinhaber: Siemens Energy Global GmbH & Co. KG, 81739 München (DE)
(72) Erfinder: KUSCHEL, Mark, 13156 Berlin (DE); LUTZ, Bernhard, 10629 Berlin (DE)
(86) Internationale Anmeldenummer: PCT/EP2018/079964
(87) Internationale Veröffentlichungsnummer: WO 2019/096589

(56) Entgegenhaltungen:
- WO-A1-2014/037031
- DE-A1- 2 702 767
- DE-A1-102014 119 028
- JP-A- 2001 194 409

## Beschreibung

Die Erfindung betrifft ein Verfahren zum Befüllen eines Druckbehälters einer Elektroenergieübertragungseinrichtung mit einem elektrisch isolierenden Fluid, welches zumindest eine erste Komponente und eine zweite Komponente aufweist sowie ein Servicegerät zum Durchführen des Verfahrens.

Aus der Offenlegungsschrift DE 31 22 886 A1 ist ein Verfahren zum Füllen und Entleeren von Gehäusen von gasisolierten elektrischen Geräten und Anlagen bekannt. Zur Durchführung des bekannten Verfahrens ist vorgesehen, ein Gasablassventil an einem Trennbehälter vorzusehen. Der Trennbehälter kann durch eine geeignete Temperierung das dort verwendete SF₆-Gas verflüssigen. Ein unerwünschter Luftmengenanteil kann so aus dem SF₆-Gas abgeschieden werden und über das Gasablassventil abgelassen werden.

Eine Verunreinigung des Isoliergases SF₆ mit einem unerwünschten Luftmengenanteil kann nicht ausgeschlossen werden. Gegebenenfalls tritt eine Verunreinigung erst nach einem längeren Betrieb auf. Dadurch wird die Isolationsfestigkeit des Isoliergases undefiniert beeinflusst. Ein entsprechend hoher Aufwand ist zu betreiben, um diese Luftmengenanteile zu reduzieren. Weiterhin erweist sich mit zunehmender Baugröße ein Transport der größeren Mengen an Isoliergas als aufwendig.

DE 10 2014 119028 A1 offenbart bereits ein Verfahren zum Befüllen eines Druckbehälters einer Elektroenergieübertragungseinrichtung mit einem isolierenden Fluid, welches eine erste und eine zweite Komponente (Luft oder 02) aufweist, wobei die erste Komponente in einem ersten Zwischenspeicher vorliegend in den Behälter eingebracht wird.

Aus der WO 2014/037031 A1 ist bekannt, Luft als Trägergas in einem Behälter bereitzustellen, wobei unter Luft auch atmosphärische Luft oder getrocknete Druckluft zu verstehen sind. Hinweise auf den Ort, wo die Luft in den Behälter gelangt, sind nicht ersichtlich.

Daher ist es Aufgabe der Erfindung, ein Verfahren zum Befüllen eines Behälters am Aufstellungsort anzugeben, bei dem das elektrisch isolierende Fluid effizient bereitgestellt wird.

Erfindungsgemäß wird die Aufgabe bei einem Verfahren der eingangs genannten Art dadurch gelöst, dass die erste Komponente in einem Zwischenspeicher vorliegend in den Behälter eingebracht wird, dass atmosphärische Luft aus der Umgebung des Behälters entnommen und zur zweiten Komponente aufbereitet wird und dass die zweite Komponente in den Behälter eingebracht wird.

Eine Elektroenergieübertragungseinrichtung dient einer Transmission elektrischer Energie. Üblicherweise sind dazu elektrische Phasenleiter eingesetzt, welche elektrisch isoliert anzuordnen sind, um Erd- und Kurzschlüsse zu vermeiden. Als elektrisches Isoliermedium haben sich elektrisch isolierende Fluide als vorteilhaft erwiesen, welche einen Phasenleiter umspülen. Entsprechend kann zumindest abschnittsweise an einem Phasenleiter auf eine Nutzung einer Feststoffisolation verzichtet werden. Dies weist den Vorteil auf, dass die elektrisch isolierende Fluidisolation selbstheilend ist. Bei einem Auftreten von Störungen in der elektrischen Isolation können ein entstehender Durchschlagskanal oder Teilentladungspunkte aufgrund des Strömungsverhaltens des Fluides selbsttätig geschlossen und stabilisiert werden. Als elektrisch isolierende Fluide eignen sich insbesondere Gase, die innerhalb eines Behälters, insbesondere innerhalb eines Druckbehälters, hermetisch eingehaust sind. Bei der Verwendung eines Druckbehälters besteht die Möglichkeit, das dort eingeschlossene Fluid unter einen gegenüber der Umgebung abweichenden Druck, insbesondere einen Überdruck, zu setzen. Gegebenenfalls kann im Innern des Druckbehälters auch das Fluid unter einer gasförmigen sowie einer flüssigen Phase vorliegen. Bevorzugt sollte das Fluid jedoch mehrheitlich in Gasform im Innern des Druckbehälters vorliegen.

Mit der Verwendung eines elektrischen Fluides, welches eine erste Komponente und eine zweite Komponente aufweist, ist ein Fluid gebildet, in welchem die beiden Komponenten parallel vorliegen, d. h. die beiden Komponenten reagieren nicht oder nur unwesentlich miteinander (inerte Komponenten). Entsprechend können die beiden Komponenten in unterschiedlichen Verhältnissen in dem Fluid vorliegen.

Ein Druckbehälter ist vor einer Inbetriebnahme der Elektroenergieübertragungseinrichtung mit einem entsprechenden elektrisch isolierenden Fluid zu befüllen, so dass im Innern des Druckbehälters angeordnete Phasenleiter zumindest abschnittsweise frei von einer Feststoffisolation gehalten und von dem elektrisch isolierenden Fluid umspült sind. Das elektrisch isolierende Fluid isoliert die Phasenleiter gegenüber einer Wandung des Behälters. Weiter kann das elektrisch isolierende Fluid mehrere Phasenleiter, welche im Innern des Behälters angeordnet sind und voneinander abweichende elektrische Potentiale aufweisen, gegeneinander elektrisch isolieren. Mit zunehmenden Spannungen ist zur Realisierung ausreichender elektrischer Schlagweiten die Distanz zwischen dem Behälter zu den Phasenleitern bzw. der Phasenleiter untereinander zu vergrößern. Durch eine Druckerhöhung kann einer außergewöhnlich starken Vergrößerung der notwendigen Schlagweiten entgegengewirkt werden. Insbesondere im Hochspannungs- und Höchstspannungsbereich, also d. h. bei elektrischen Spannungen über 1.000 Volt, insbesondere über 10.000 Volt, 30.000 Volt, 70.000 Volt, 140.000 Volt bis über 1 000 000 Volt, kann durch eine Druckerhöhung die dielektrische Stabilität des Fluides verbessert werden. Trotz aller Optimierungen steigt mit zunehmender Spannung die nötige Menge an elektrisch isolierendem Fluid. Mit zunehmenden Mengen an elektrisch isolierendem Fluid stellt sich die Frage, wie diese effizient zu transportieren bzw. bereitzustellen ist. Bestimmte Komponenten können vergleichsweise kostengünstig regional bezogen werden. Andere Komponenten sind kostenintensiv lediglich an wenigen Orten lokal verfügbar. Entsprechend gestaltet sich ein Zusammenfügen zweier Komponenten und Transportieren der zusammengefügten Komponenten schwierig, insbesondere wenn die beiden Komponenten von unterschiedlichen Orten bezogen werden. Eine weitere Möglichkeit bietet der Transport eines bereits vorkonfektionierten elektrisch isolierenden Fluides, in welchem die erste und zweite Komponente bereits in der gewünschten Konzentration vorliegen. Aufgrund der notwendigen großen Transportbehälter ist dieses Vorgehen als kostenintensiv einzuschätzen. Eine kostengünstige und effiziente Methode zum Befüllen eines Behälters mit einem Fluid ist dabei die erste Komponente in einem Zwischenspeicher vorzuhalten. Dieser Zwischenspeicher kann beispielswiese ein Transportbehälter sein, in welchem die erste Komponente von ihrem Gestehungsort zu ihrem Anwendungsort überführt wird. Der Zwischenspeicher kann beispielsweise ein Druckbehälter sein, welcher die in ihm enthaltene erste Komponente unter Überdruck vorhält. Ein derartiger Transport der ersten Komponente in einem Zwischenspeicher ist insbesondere dann vorteilhaft, wenn die erste Komponente vergleichsweise kostenintensiv ist, so dass ein Transport betriebswirtschaftlich sinnvoll ist. Des Weiteren kann auch vorgesehen sein, dass die erste Komponente in einem besonders hohen Reinheitsgrad zu verwenden ist, um ein elektrisch isolierendes Fluid mit einer ausreichenden Isolationsfestigkeit bereitzustellen. Die erste Komponente kann entsprechend aus dem Zwischenspeicher in den Druckbehälter der Elektroenergieübertragungseinrichtung eingefüllt werden. Ein Befüllen kann bevorzugt unmittelbar, d.h. ohne eine weitere Behandlung/Aufbereitung der ersten Komponente erfolgen. Vorteilhaft weist die erste Komponente eine höhere dielektrische Festigkeit auf als die zweite Komponente. Je nach Vorliegen der Komponenten kann jedoch auch vor einem Mischen eine Behandlung nötig sein. Beispielsweise kann ein Verflüssigen, ein Vergasen, ein Temperieren usw. nötig werden.

Aus der Umgebung des Behälters oder aus der Umgebung des Zwischenspeichers kann atmosphärische Luft entnommen werden. Atmosphärische Luft weist dabei eine charakteristische Zusammensetzung auf, die jedoch je nach Ort der Entnahme variieren kann. Insbesondere kann die atmosphärische Luft mit Fremdstoffen verunreinigt sein, welche die dielektrischen Eigenschaften der atmosphärischen Luft in unklarer Weise verändern können. Als solches ist die atmosphärische Luft aus der Umgebung des Behälters bzw. des Zwischenspeichers aufzubereiten, so dass eine zweite Komponente entsteht, welche aus der atmosphärischen Luft gewonnen wird. Nach einer Aufbereitung kann die zweite Komponente einen vernachlässigbaren Anteil an Fremdstoffen aufweisen. Diese Fremdstoffe sollten an der zweiten Komponente einen Anteil von weniger als 1% bilden. Fremdstoffe sind beispielsweise Edelgase wie Argon, Helium, Neon, Krypton. Insbesondere nach einer Reinigung bzw. Abscheidung von unerwünschten Anteilen aus der atmosphärischen Luft kann die so gewonnene zweite Komponente in den Behälter eingebracht werden. Entsprechend stellt sich innerhalb des Behälters ein elektrisch isolierendes Fluid ein, welches die erste sowie die zweite Komponente aufweist. Beide Komponenten existieren innerhalb des elektrisch isolierenden Fluides parallel und durchmischen einander. Dabei weist die zweite Komponente im Regelfall einen höheren prozentualen (Masse)Anteil am Fluid auf als die erste Komponente.

Vor einem Befüllen des Behälters mit zumindest einer der Komponenten ist im Innern des Behälters bevorzugt zumindest ein Unterdruck zu erzeugen. Der Unterdruck kann bevorzugt unter 20 mbar liegen. Dadurch können Fremdstoffe entzogen werden, welcher das elektrisch isolierende Fluid verunreinigen könnten.

Vorteilhafterweise kann vorgesehen sein, dass die erste Komponente vor der zweiten Komponenten in den Behälter eingebracht wird.

Durch ein Befüllen des Behälters zunächst mit der ersten Komponente besteht die Möglichkeit, räumlich getrennt vom Gestehungsort der zweiten Komponente die erste Komponente in dem Behälter einzufügen. Somit kann ein zeitliches Auseinanderfallen der Gestehung und Verbringung von erster Komponente und zweiter Komponente in den Behälter ausgeglichen werden. Beispielsweise kann vorgesehen sein, dass der Behälter der Elektroenergieübertragungseinrichtung beispielsweise im Rahmen eines Fertigungsprozesses in einer Fabrik vorgefertigt und mit der ersten Komponente befüllt wird, wohingegen nach einem Verbringen des Behälters der Energieübertragungseinrichtung beispielsweise an seinen Aufstellort nachträglich die zweite Komponente in den Behälter eingebracht wird. So kann die erste Komponente gemeinsam mit dem Behälter der Elektroenergieübertragungseinrichtung verschifft werden.

Eine weitere vorteilhafte Ausgestaltung kann vorsehen, dass die zweite Komponente vor der ersten Komponente in den Behälter eingebracht wird.

Das Einbringen der zweiten Komponente vor der ersten Komponente in den Behälter kann vorteilhaft dann vorgesehen werden, wenn beispielsweise zu Testzwecken, beispielsweise Dichtigkeitsprüfungen oder Druckprüfungen, zunächst ein teilweises Befüllen des Behälters vorgesehen ist. Dies ist insbesondere bei der Nutzung eines Druckbehälters von Vorteil. Insbesondere bei unterschiedlichen Gefahrenpotentialen von erster und zweiter Komponente kann beispielsweise bei einer neutralen zweiten Komponente diese genutzt werden, um Prüfungen vorzunehmen. Ein Verlust der zweiten Komponente kann dabei unter betriebswirtschaftlichen und/oder unter Umweltschutzgesichtspunkten hingenommen werden. Nach Bestehen der notwendigen Prüfung kann die erste Komponente der zweiten Komponente zugefügt werden. Hierzu kann ein Temperieren (Erwärmen) insbesondere der ersten Komponente oder auch der zweiten Komponente oder mehrerer Komponenten von Vorteil sein. Dadurch kann insbesondere einer Verflüssigung zumindest einer der Komponenten entgegengewirkt werden.

Eine weitere vorteilhafte Ausgestaltung kann vorsehen, dass die erste und die zweite Komponente vor einem Einbringen in den Behälter miteinander in Kontakt treten.

Ein Vermischen von erster und zweiter Komponente kann bereits außerhalb des Behälters erfolgen, so dass bei einem Einfüllen des elektrisch isolierenden Fluides in den Behälter die erste und die zweite Komponente bereits miteinander vermischt sind. Eine derartige Befüllung weist den Vorteil auf, dass ein Mischen von erster und zweiter Komponente automatisiert beispielsweise in einem Servicegerät, vorgenommen werden kann, so dass die Qualität der Vermischung mit dem jeweiligen Anteil von erster und zweiter Komponente gesichert werden kann. Insbesondere ist auch sichergestellt, dass unmittelbar nach einem Abschließen der Befüllung des Behälters die beiden Komponenten vollständig durchmischt sind, so dass in einem Fluidaufnahmeraum des Behälters ein homogenes Fluid vorliegt. Die Elektroenergieübertragungseinrichtung weist bereits kurz nach einem Befüllen mit dem elektrisch isolierenden Fluid eine ausreichende dielektrische Stabilität auf.

Eine weitere vorteilhafte Ausgestaltung kann vorsehen, dass die erste und die zweite Komponente ein binäres oder ternäres Gasgemisch bilden.

Die Ausbildung eines binären oder ternären Gasgemisches weist den Vorteil auf, dass die Anzahl der verschiedenen Moleküle innerhalb des elektrisch isolierenden Gases reduziert ist. So sind bei einem binären Gasgemisch bevorzugt zwei Molekülarten im elektrisch isolierenden Gas vorliegend. Bei einem ternären Gasgemisch sind drei Molekülarten in dem elektrisch isolierenden Gas vorliegend. Ein binäres Gasgemisch weist bevorzugt Stickstoff oder Sauerstoff und Fluor auf. Bei einem ternären Gasgemisch kann das Gasgemisch bevorzugt Stickstoff und Sauerstoff und zusätzlich Fluor aufweisen.

Eine weitere vorteilhafte Ausgestaltung kann vorsehen, dass die zweite Komponente im Wesentlichen Sauerstoff und Stickstoff aufweist.

Die Nutzung von Sauerstoff und Stickstoff gestattet es, die zweite Komponente aus atmosphärischer Luft zu erzeugen, da in dieser sowohl Sauerstoff als auch Stickstoff vorliegen. Dabei ist von Vorteil, wenn der Stickstoff einen größeren Anteil als der Sauerstoff in der zweiten Komponente aufweist. Der Sauerstoff kann beispielsweise einen Anteil von 0-21% an der zweiten Komponente aufweisen, wobei der Stickstoff vollständig oder zumindest teilweise bevorzugt 79% bis 100% die verbleibenden Anteile der zweiten Komponente darstellt. Vorteilhafterweise kann weiter vorgesehen sein, dass die erste Komponente eine höhere dielektrische Festigkeit aufweist als die zweite Komponente.

Die zweite Komponente kann bei einer Erzeugung derselben aus atmosphärischer Luft in großen Mengen kostengünstig gewonnen werden. Durch die Nutzung einer ersten Komponente mit einer höheren dielektrischen Festigkeit kann mit geringen Mengen der ersten Komponente die zweite Komponente in ihrer dielektrischen Festigkeit stabilisiert bzw. verbessert werden. Somit ist die Möglichkeit gegeben, die zweite Komponente als Trägerfluid zu verwenden, wobei die erste Komponente ein Dotierungsfluid darstellt, wodurch eine vereinfachte Gestehung bzw. ein vereinfachter Transport bzw. Bereitstellung des elektrisch isolierenden Fluides für eine Befüllung des Behälters erfolgen kann.

Voreilhafterweise kann die erste Komponente eine fluorhaltige Verbindung, insbesondere eine fluororganische Verbindung sein.

Fluorverbindungen beeinflussen elektrisch isolierende Eigenschaften eines Fluides im Allgemeinen positiv. Darüber hinaus weisen diese im Falle eines Auftretens von Lichtbogenerscheinungen lichtbogenlöschende Eigenschaften auf.

Es kann weiterhin bevorzugt sein, dass die wenigstens eine fluororganische Verbindung ausgewählt ist aus der Gruppe bestehend aus Fluornitrilen, wie etwa Perfluoronitrilen, Fluorethern, wie etwa Hydrofluoromonoethern, Fluorolefinen, wie etwa Hydrofluoroolefinen, und Fluorketonen, wie etwa Perfluoroketonen.

Bevorzugte Fluororganische Verbindungen können Hydrofluoromonoether mit wenigstens drei Kohlenstoffatomen, Fluoroketone mit einer Anzahl von vier bis zwölf Kohlenstoffatomen, beispielsweise fünf oder sechs Kohlenstoffatomen aufweisen.

Weiter bevorzugt kann die fluororganische Verbindung ein Perfluoralkylnitril, wie etwa eine Verbindung ausgewählt aus Perfluoracetonitril, Perfluoropropionitril (C₂F₅CN), Perfluorobutyronitril (C₃F₇CN), Perfluoroisobutyronitril (CF₃)₂CFCN), Perfluoro-2-methoxypropannitril (CF₃CF(OCF₃)CN), oder Mischungen hieraus aufweisen, wie diese etwa in WO 2015/071303 A1 beschrieben sind.

Eine weitere Aufgabe der Erfindung ist es, ein Servicegerät zum Befüllen eines Behälters am Aufstellungsort anzugeben, bei dem das elektrisch isolierende Fluid effizient bereitgestellt wird .

Erfindungsgemäß wird die Aufgabe durch ein Servicegerät mit den Merkmalen des Anspruchs 9 gelöst.

Mittels eines Servicegerätes ist ein Aufbereiten der zweiten Komponente beispielsweise aus der atmosphärischen Luft, welche das Servicegerät und/oder den Behälter einer Elektroenergieübertragungsanlage umgibt, ermöglicht. Dazu weist das Servicegerät eine Aufbereitungskaskade auf, mittels welcher in aufeinanderfolgenden Arbeitsschritten, insbesondere ein Reinigen, d. h. ein Entfernen von Fremdstoffen, der atmosphärischen Luft erfolgt. Ein Zumischpunkt kann an dem Servicegerät an der Stelle vorgesehen sein, an welcher die zweite Komponente im aufbereiteten Zustand vorliegt. Somit kann ein Verbinden von erster und zweiter Komponente zu einem Zeitpunkt erfolgen, an welchem bereits eine gereinigte zweite Komponente vorliegt. Dadurch besteht die Möglichkeit, beispielsweise auf das Zumischen am Zumischpunkt folgend ein Überleiten bzw. Einlassen der elektrisch isolierenden Fluidisolation in den Behälter einer Elektroenergieübertragungseinrichtung vorzunehmen. Insbesondere bei der Nutzung eines Druckbehälters kann so eine erwünschte Druckbeaufschlagung bzw. Dichte des elektrisch isolierenden Fluids in einem Fluidaufnahmeraum des Druckbehälters erzielt werden. Bedarfsweise kann das Servicegerät dazu mit dem Behälter verbunden sein. Nach erfolgter Befüllung des Behälters oder auch nach einer Entnahme der Fluidisolation aus dem Behälter kann ein Entfernen des Servicegerätes vorgesehen sein. Das Servicegerät kann als solches bevorzugt transportabel ausgebildet sein, so dass es an verschiedenen Standorten verwendbar ist.

Vorteilhafterweise kann vorgesehen sein, dass am Zumischpunkt ein Zumischen der ersten Komponente zu der aufbereiteten zweiten Komponente erfolgt.

Durch ein Zumischen der ersten Komponente zu der aufbereiteten zweiten Komponente besteht die Möglichkeit, mit dem Zumischen ein Fertigstellen der elektrisch isolierenden Fluidisolation zu erzielen. Je nach Bedarf kann am Zumischpunkt das Mischungsverhältnis von erster und zweiter Komponente justiert werden.

Eine weitere vorteilhafte Ausgestaltung kann vorsehen, dass die erste Komponente eine höhere dielektrische Festigkeit aufweist als die zweite Komponente.

Durch die Verwendung der ersten Komponente mit einer höheren dielektrischen Festigkeit gegenüber der zweiten Komponente kann die zweite Komponente als Trägerkomponente dienen, welche durch die Dotierung mit der ersten Komponente in ihrer dielektrischen Festigkeit verbessert wird.

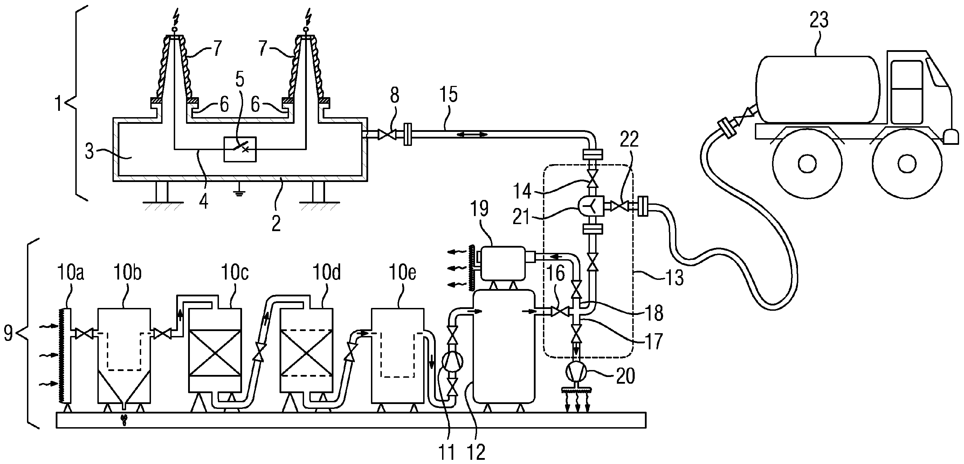

Im Folgenden wird ein Ausführungsbeispiel der Erfindung schematisch in einer Zeichnung gezeigt und nachfolgend näher beschrieben. Dabei zeigt die
- Figur 1: eine Elektroenergieübertragungseinrichtung im Querschnitt mit einem angeschlossenen Servicegerät.

In der Figur ist beispielhaft eine Elektroenergieübertragungseinrichtung 1 abgebildet. Die Elektroenergieübertragungseinrichtung 1 ist beispielhaft als fluidisolierter Leistungsschalter ausgeführt. Der Leistungsschalter weist eine sogenannte Dead-Tank-Bauform auf. Darüber hinaus sind aber auch jegliche weitere Ausgestaltungen von Elektroenergieübertragungseinrichtungen 1 vorstellbar, welche einen Behälter mit Fluidaufnahmeraum aufweisen. So können beispielsweise Leistungsschalter in Life-Tank-Bauweise oder so genannte gasisolierte Schaltanlagen als Elektroenergieübertragungseinrichtungen 1 dienen. Neben Elektroenergieübertragungseinrichtungen 1 mit aktiven Baugruppen (schaltfähigen Baugruppen) im Fluidaufnahmeraum können Elektroenergieübertragungseinrichtungen 1 auch lediglich passive Baugruppen im Fluidaufnahmeraum aufweisen. In passiven Baugruppen (z.B. fluidisolierte Leitungen, Kabelendverschlüsse, usw.) treten keine Schaltvorgänge auf.

Die Elektroenergieübertragungseinrichtung 1 weist ein Kapselungsgehäuse 2 auf. Das Kapselungsgehäuse 2 ist hier im Wesentlichen als hohlzylindrischer Körper mit im Wesentlichen kreisförmigem Querschnitt ausgebildet. Das Kapselungsgehäuse 2 bildet einen Druckbehälter. Stirnseitig ist der hohlzylindrische Hohlkörper fluiddicht verschlossen. Das Kapselungsgehäuse 2 begrenzt in seinem Innern einen Fluidaufnahmeraum 3. Im Fluidaufnahmeraum 3 ist ein Phasenleiter 4 angeordnet. Der Phasenleiter 4 ist vorliegend mit einer Schalteinrichtung 5 ausgestattet (aktive Baugruppe). Der Phasenleiter 4 ist zentrisch im Kapselungsgehäuse 2 gelagert. Ein elektrisch isolierendes Fluid, insbesondere Gas, erstreckt sich um die Schalteinrichtung 5. Um den Phasenleiter 4 elektrisch zu kontaktieren, sind am Kapselungsgehäuse 2 mantelseitige Stutzen 6 angeordnet. An den mantelseitigen Stutzen 6 sind so genannte Freiluftdurchführungen 7 angeordnet. Die Freiluftdurchführungen 7 dienen einem elektrisch isolierten Passieren des Phasenleiters 4 durch eine Wandung des Kapselungsgehäuses 2 in die Umgebung der Elektroenergieübertragungseinrichtung 1. Der Phasenleiter 4 läuft so von der Umgebung der Elektroenergieübertragungseinrichtung 1 kommend in das Kapselungsgehäuse 2 hinein, durchläuft dort die Schalteinrichtung 5 und verlässt das Kapselungsgehäuse 2 wieder in die Umgebung der Elektroenergieübertragungseinrichtung 1.

Der hohlzylindrische Grundkörper des Kapselungsgehäuses 2 ist beispielsweise zumindest abschnittsweise aus einem elektrisch leitenden Material gebildet. Elektrisch leitende Abschnitte des Kapselungsgehäuses 2 sind mit Erdpotential beaufschlagt. Das Kapselungsgehäuse 2 bzw. der Fluidaufnahmeraum 3 bilden eine fluiddichte Barriere, so dass ein Fluid aus dem Fluidaufnahmeraum 3 nicht hinaustreten kann.

Das Kapselungsgehäuse 2 weist eine Befüllarmatur 8 auf. Mittels der Befüllarmatur 8 ist die Möglichkeit gegeben, den Fluidaufnahmeraum 3 mit einem elektrisch isolierenden Fluid zu befüllen bzw. ein elektrisch isolierendes Fluid aus dem Fluidaufnahmeraum 3 zu entfernen. Dazu weist die Befüllarmatur 8 ein Ventil auf, mittels welchem die Befüllarmatur 8 geöffnet und geschlossen werden kann. Zum Befüllen oder Entleeren des Fluidaufnahmeraums 3 der Elektroenergieübertragungseinrichtung 1 ist ein Servicegerät 9 vorgesehen. Das Servicegerät 9 ist ortsveränderlich ausgebildet. Das Servicegerät 9 kann beispielsweise in einem Container oder auf einer Containerplattform aufgebaut sein. Das Servicegerät 9 weist mehrere Filteranordnungen 10a, 10b, 10c, 10d, 10e auf. Jede der Filteranordnungen 10a, 10b, 10c, 10d, 10e dient einem Behandeln von aus der Umgebung der Elektroenergieübertragungseinrichtung 1 entnommener Luft. Dabei sind die Filteranordnungen 10a, 10b, 10c, 10d, 10e kaskadierend aufgebaut, so dass mit zunehmender Anzahl passierter Filteranordnungen 10a, 10b, 10c, 10d, 10e der Reinheitsgrad der atmosphärischen Luft, welche aus der Umgebung der Elektroenergieübertragungseinrichtung 1 entnommen wurde, zunimmt. Die Filteranordnungen 10a, 10b, 10c, 10d, 10e können auch als Nullluftgenerator bezeichnet werden. Die erste Filteranordnung 10a ist als Lufteinlauf ausgebildet, wobei eine großflächige Lufteintrittsöffnung mit einer gitterartigen Barriere versehen ist, um ein Eindringen von großen Fremdkörpern in das Servicegerät 9 zu verhindern. Auf die erste Filteranordnung 10a folgt eine zweite Filteranordnung 10b, in welcher aus dem einströmenden Luftvolumen Partikel und Aerosole entfernt werden. Beispielsweise kann in der zweiten Filteranordnung 10b auch Feuchtigkeit separiert werden, so dass eine Trocknung der einströmenden Luft erfolgt. In einer dritten Filteranordnung 10c besteht nunmehr die Möglichkeit, Kohlenwasserstoffe durch Oxidation aus der einströmenden Luft zu entfernen. Zur Beförderung der Oxidation kann eine Temperierung der einströmenden Luft erfolgen. Zusätzlich kann ein Katalysator eingesetzt werden, um gasförmige Kohlenwasserstoffe zum Beispiel in Kohlendioxid CO₂ und Wasser H₂O zu wandeln und diese dann aus der dritten Filteranordnung 10c zu entnehmen. In einer vierten Filteranordnung 10d besteht nunmehr die Möglichkeit durch weitere Behandlung der aus der Umgebung entnommenen atmosphärischen Luft mittels eines Adsorptionsfilters Restanteile von organischen Verbindungen, wie zum Beispiel Kohlenwasserstoffe, zu binden. In einer fünften Filteranordnung 10e kann nunmehr in einem Feinststaubfilter eine mechanische Reinigung von verbliebenen Fremdteilchen vorgenommen werden.

Eine Passage von Luft durch die Filteranordnungen 10a, 10b, 10c, 10d, 10e kann durch ein Gebläse befördert werden. Nach einer Passage der verschiedenen Filteranordnungen 10a, 10b, 10c, 10d, 10e liegt nunmehr eine behandelte, insbesondere eine aus der Umgebung entnommene zweite Komponente für ein elektrisch isolierendes Fluid vor. Mittels eines Kompressors 11 besteht nunmehr die Möglichkeit, die behandelte aus der Umgebung entnommene atmosphärische Luft (zweite Komponente) unter einen Überdruck zu setzen und in einem Pufferspeicher 12 zu puffern. Der Kompressor 11 kann die Funktion eines Gebläses übernehmen um einen Luftstrom durch die Filteranlagen 10a, 10b, 10c, 10d, 10e zu befördern. Mittels des Pufferspeichers 12 können beispielsweise Schwankungen während der Behandlung der atmosphärischen Luft in den Filteranordnungen 10a, 10b, 10c, 10d, 10e ausgeglichen werden. Am Ausgang des Pufferspeichers 12 schließt sich eine Ventilbaugruppe 13 an. Über verschiedene Ventile der Ventilbaugruppe 13 ist es möglich, im Pufferspeicher 12 zwischengepufferte behandelte atmosphärische Luft in den Fluidaufnahmeraum 3 der Elektroenergieübertragungseinrichtung strömen zu lassen. Die Ventilbaugruppe 13 weist dazu ein Ausgangsventil 14 auf. Ausgangsseitig ist das Ausgangsventil 14 mit einer Koppelstelle versehen, um über eine demontierbare Verrohrung 15 eine Verbindung mit der Befüllarmatur 8 der Elektroenergieübertragungseinrichtung 1 herzustellen. Das Ausgangsventil 14 der Ventilbaugruppe 13 ist wiederum mit einem Zwischenpufferausgangsventil 16 verbunden. Über das Zwischenpufferausgangsventil 16 ist ein Verschließen des Zwischenpuffers 12 möglich, so dass innerhalb des Zwischenpuffers 12 ein behandeltes Luftvolumen eingeschlossen werden kann. Mit einem Öffnen des Zwischenpufferausgangsventils 16 sowie dem Ausgangsventil 14 der Ventilbaugruppe 13 ist es möglich, aus dem Zwischenpuffer 12 in den Fluidaufnahmeraum 3 ein Fluid übertreten zu lassen.

Weiterhin weist die Ventilbaugruppe 13 benachbart zum Ausgangsventil 14 eine Mischeinrichtung 21 auf. Mittels der Mischeinrichtung 21 ist in einem Strom eines Fluides, welches zum Ausgangsventil 14 strömt bzw. von dem Ausgangsventil 14 kommt, eine erste Komponente einzumischen. Dazu weist die Mischeinrichtung 21 ein Zumischventil 22 auf. Über das Zumischventil 22 kann aus einem transportablen Zwischenspeicher 23 die erste Komponente, beispielsweise eine fluorhaltige erste Komponente, zugemischt werden. Ein Zumischen erfolgt bevorzugt im gasförmigen Zustand der beiden Komponenten. Zur Erzielung einer definierten Durchmischung kann die Mischeinrichtung 21 eine Temperiereinrichtung aufweisen, so dass ein Erwärmen oder Kühlen vorgenommen werden kann. Durch eine Temperierung kann der erwünschte Aggregatzustand der Komponenten erzielt/stabilisiert werden. Die Mischeinrichtung 21 kann einen Mass flow Controller sowie eine Gasmischpumpe aufweisen. Zur Erzielung des erwünschten Mischverhältnisses können z. B. volumetrische Verfahren, gravimetrische Verfahren oder Partialdruckverfahren Verwendung finden. Dabei kann vorgesehen sein, dass ein Zumischen der ersten Komponente kontinuierlich in einen Strom der zweiten Komponente, welcher aus dem Pufferspeicher 12 kommend in den Fluidaufnahmeraum 3 der Elektroenergieübertragungseinrichtung 1 strömt, eingemischt wird. Es kann jedoch auch vorgesehen sein, dass ein Zumischen der ersten Komponente über die Mischeinrichtung 21 erst nach einem Abschluss der Verbringung einer ausreichenden Menge der zweiten Komponente in den Fluidaufnahmeraum 3 der Elektroenergieübertragungseinrichtung 1 vorgenommen wird. Alternativ kann ein Zumischen der ersten Komponente über das Zumischventil 22 und Einleitung derselben in den Fluidaufnahmeraum 3 der Elektroenergieübertragungseinrichtung 1 auch vor einem Befüllen desselben mit der zweiten Komponente erfolgen. Je nach Erfordernis wird die erste Komponente mit der zweiten Komponente vor einem Verbringen in die Elektroenergieübertragungseinrichtung 1 vermischt. Die zweite Komponente kann jedoch auch vor oder nach der ersten Komponente in den Fluidaufnahmeraum 3 verbracht werden. Eine zeitliche Abfolge kann durch eine Betätigung der Ventile der Ventilbaugruppe 13 entsprechend gesteuert werden.

In der Verrohrung zwischen dem Zwischenpufferausgangsventil 16 sowie dem Ausgangsventil 14 der Ventilbaugruppe 13 sind weiterhin eine Absaugstichleitung 17 sowie eine Ablassstichleitung 18 angeordnet. Sowohl die Absaugstichleitung 17 als auch die Ablassstichleitung 18 sind jeweils über ein Ventil verschließbar. Die Ablassstichleitung 18 mündet in einer Abscheideeinrichtung 19, welche von einem aus der Ventilbaugruppe 13 herauszulassenden Fluid zu passieren ist. Die Abscheideeinrichtung 19 sorgt für eine Abscheidung von Stoffen, welche nicht in die Umgebung der Elektroenergieübertragungseinrichtung 1 abgelassen werden sollen. Die Abscheideeinrichtung 19 kann insbesondere einen Katalysator zu einer Wandlung von Stickoxiden aufweisen. Weiterhin kann die Abscheideeinrichtung 19 einer Abscheidung/Trennung der zwei Komponenten, welche in der Elektroenergieübertragungseinrichtung 1 das elektrisch isolierende Fluid bilden, dienen. Die Abscheideeinrichtung 19 kann beispielsweise Filter zum Filtern verschiedener Stoffe (z. B. Zersetzungsprodukte) aufweisen. Die Abscheideeinrichtung 19 kann beispielsweise eine Kühlfalle zum Separieren von Stoffen bzw. Komponenten aufweisen. Insbesondere kann eine zuvor über das Zumischventil 22 zugeführte erste Komponente (z.B. fluorhaltige organische Verbindung) abgetrennt werden. Die von der ersten Komponente separierte Luft (zweite Komponente) kann wieder in die Umgebung abgegeben werden. Die erste Komponente kann in der Abscheideeinrichtung 19 verbleiben und dort entnommen werden.

Im Folgenden wird ein Befüllen des Fluidaufnahmeraumes 3 der Elektroenergieübertragungseinrichtung 1 beschrieben.

Es wird davon ausgegangen, dass der Fluidaufnahmeraum 3 der Elektroenergieübertragungseinrichtung 1 mit einem undefinierten Gas (z.B. ungereinigte atmosphärische Luft) gefüllt ist. Zunächst wird die Befüllarmatur 8 geöffnet. Das Zwischenpufferausgangsventil 16 ist verschlossen. Ebenso ist das Ventil in der Ablassstichleitung 18 verschlossen. Das Ventil in der Absaugstichleitung 17 ist geöffnet. Ebenso ist das Ausgangsventil 14 der Ventilbaugruppe 13 geöffnet. Dadurch besteht die Möglichkeit, mittels einer in der Absaugstichleitung 17 befindlichen Unterdruckpumpe 20 den Fluidaufnahmeraum 3 unter Unterdruck zu setzen. Bevorzugt kann ein Vakuum im Fluidaufnahmeraum 3 erzeugt werden. Während des Vakuumierens des Fluidaufnahmeraumes 3 kann parallel eine Reinigung von aus der Umgebung der Elektroenergieübertragungseinrichtung übernommener Luft erfolgen. Dazu kann beispielsweise mittels des Kompressors 11 aus der Umgebung Luft durch die Filteranordnungen 10a, 10b, 10c, 10d, 10e angesaugt werden, woraufhin die behandelte aus der Umgebung entnommene atmosphärische Luft in den Pufferspeicher 12 gepumpt und dort unter Überdruck gesetzt werden kann. Mit einer ausreichenden Erlangung eines Vakuums im Innern des Fluidaufnahmeraumes 3 kann die Absaugstichleitung 17 verschlossen werden. Die Unterdruckpumpe 20 kann ihre Arbeit einstellen. Nunmehr besteht die Möglichkeit, das Zwischenpufferausgangsventil 16 zu öffnen und im Pufferspeicher 12 zwischengespeicherte gereinigte atmosphärische Luft in die Ventilbaugruppe 13 einlaufen zu lassen. Über die Mischeinrichtung 21 kann zeitlich mit dem Einlaufen der gereinigten Luft (zweite Komponente) die erste Komponente aus dem Zwischenspeicher 23 in einer erwünschten Konzentration in den Strom der zweiten Komponente eingemischt werden. Das elektrisch isolierende Fluid, welches nunmehr im Wesentlichen die vermischte erste und zweite Komponente aufweist, kann über das Ausgangsventil 14 und die Befüllarmatur 8 getrieben durch eine Druckdifferenz in den Fluidaufnahmeraum 3 hineinströmen. Bedarfsweise kann jedoch auch vorgesehen sein, dass zunächst ein Einströmen der zweiten Komponente (gereinigte Luft) und darauf folgend unter entsprechender Schaltung der Ventile der Ventilbaugruppe 13 ein Einströmen der ersten Komponente in den Fluidaufnahmeraum 3 erfolgt. Je nach Notwendigkeit kann auch ein umgekehrtes Prozedere, d.h. zunächst ein Einströmen der ersten Komponente über das Zumischventil 22 in den Fluidaufnahmeraum 3 und zeitlich darauf folgend ein Einströmen der zweiten Komponente (gereinigte Luft) in den Fluidaufnahmeraum 3 der Elektroenergieübertragungseinrichtung vorgenommen werden.

Ist im Fluidaufnahmeraum 3 eine ausreichende Dichte (spezifischer Druck bei spezifischer Temperatur) erreicht, kann ein Verschließen der Befüllarmatur 8 des Kapselungsgehäuses 2 vorgenommen werden. Ebenso kann ein Verschließen des Zwischenpufferausgangsventils 16 vorgenommen werden.

Im Folgenden soll beschrieben werden, wie eine Entnahme von elektrisch isolierendem Fluid aus dem Fluidaufnahmeraum 3 vorgenommen werden kann. Zunächst sind die Befüllarmatur 8 sowie das Ausgangsventil 14 über eine Verrohrung 15 miteinander verrohrt. Das Zwischenpufferausgangsventil 16 ist geschlossen. Ebenso ist das Ventil in der Absaugstichleitung 17 verschlossen. Nunmehr besteht die Möglichkeit das Ventil in der Ablassstichleitung 18 zu öffnen. Darauf folgend können die Befüllarmatur 8 sowie das Ausgangsventil 14 geöffnet werden. Getrieben durch den Überdruck im Fluidaufnahmeraum 3 strömt das dort befindliche Fluid über die Befüllarmatur 8, die Verrohrung 15 sowie das Ausgangsventil 14 in die nunmehr geöffnete Ablassstichleitung 18 und von dort in die Abscheideeinrichtung 19. Dort erfolgt ein Trennen der beiden Komponenten des elektrisch isolierenden Fluides. Die zweite Komponente, welche vormals der Umgebung der Elektroenergieübertragungseinrichtung 1 entnommen wurde, wird in die Umgebung der Elektroenergieübertragungseinrichtung 1 zurückgeführt. Die abgeschiedene erste Komponente kann in der Abscheidevorrichtung 19 verbleiben und dort entnommen werden. Zusätzlich oder alternativ zu einem Trennen der Komponenten kann auch eine Filterung/Reinigung von weiteren Stoffen beispielsweise mittels Katalysator in der Abscheidevorrichtung 19 vorgenommen werden. Um eine Entnahme des Fluids aus dem Fluidaufnahmeraum 3 zu befördern kann in der Ablassstichleitung 18 auch die Anordnung einer Pumpe vorgesehen sein. Bedarfsweise kann auch die Absaugstichleitung 17 zum Ablassen eines im Fluidaufnahmeraum 3 befindlichen Fluids (ggf. mit einem Katalysator/Filter) dienen. Mit einem Schließen der Ablassstichleitung 18 ist eine Entnahme eines Fluids aus dem Fluidaufnahmeraum 3 über das Servicegerät 9 abgeschlossen. Bedarfsweise kann das elektrisch isolierende Fluid auch über das Zumischventil 22 der Mischeinrichtung 21 abgelassen und in einem geeigneten Behälter aufgefangen werden.

## Patentansprüche

1. Verfahren zum Befüllen eines Druckbehälters (2) einer Elektroenergieübertragungseinrichtung (1) mit einem elektrisch isolierenden Fluid, welches zumindest eine erste Komponente und eine zweite Komponente aufweist,
wobei die erste Komponente in einem Zwischenspeicher (23) vorliegend in den Druckbehälter (2) eingebracht wird, **dadurch gekennzeichnet,**
**dass** atmosphärische Luft aus der Umgebung des Druckbehälters (2) entnommen und zur zweiten Komponente aufbereitet wird und dass die zweite Komponente in den Druckbehälter (2) eingebracht wird.

2. Verfahren nach Anspruch 1,
**dadurch gekennzeichnet, dass**
die erste Komponente vor der zweiten Komponenten in den Druckbehälter (2) eingebracht wird.

3. Verfahren nach Anspruch 1,
**dadurch gekennzeichnet, dass**
die zweite Komponente vor der ersten Komponente in den Druckbehälter (2) eingebracht wird.

4. Verfahren nach einem der Ansprüche 1 bis 3,
**dadurch gekennzeichnet, dass** die erste und die zweite Komponente vor einem Einbringen in den Druckbehälter (2) miteinander in Kontakt treten.

5. Verfahren nach einem der Ansprüche 1 bis 4,
**dadurch gekennzeichnet, dass**
die erste und die zweite Komponente ein binäres oder ternäres Gasgemisch bilden.

6. Verfahren nach einem der Ansprüche 1 bis 5,
**dadurch gekennzeichnet, dass**
die zweite Komponente im Wesentlichen Sauerstoff und Stickstoff aufweist.

7. Verfahren nach einem der Ansprüche 1 bis 6,
**dadurch gekennzeichnet, dass**
die erste Komponente eine höhere dielektrische Festigkeit aufweist als die zweite Komponente.

8. Verfahren nach einem der Ansprüche 1 bis 7,
**dadurch gekennzeichnet, dass**
die erste Komponente eine fluorhaltige Verbindung, insbesondere eine fluororganische Verbindung, ist.

9. Servicegerät (9) zum Befüllen eines Druckbehälters (2) einer Elektroenergieübertragungseinrichtung (1) mit einem elektrisch isolierenden Fluid, welches zumindest eine erste Komponente und eine zweite Komponente aufweist, wobei das Servicegerät (9) einen Zumischpunkt (21) zum Einbringen der ersten Komponente der Fluidisolation vorliegend in einem Zwischenbehälter (23) in den Druckbehälter (2) aufweist,
**dadurch gekennzeichnet,**
**dass** das Servicegerät (9) eine Aufbereitungskaskade (10a, 10b, 10c, 10d, 10e)aufweist, zum Konfektionieren der zweiten Komponente, welche innerhalb des Druckbehälters (2)zumindest teilweise als eine elektrisch isolierende Fluidisolation, insbesondere Gasisolation, verwendbar ist, wobei die Aufbereitungskaskade eingerichtet ist, atmosphärische Luft aus der Umgebung des Druckbehälters (2) zu entnehmen und zur zweiten Komponente aufzubereiten, wobei das Servicegerät (9) zum Einbringen der zweiten Komponente in den Druckbehälter (2) eingerichtet ist.

10. Servicegerät (9) nach Anspruch 9,
**dadurch gekennzeichnet, dass** am Zumischpunkt (21) ein Zumischen der ersten Komponente zu der aufbereiteten zweiten Komponente erfolgt.

11. Servicegerät (9) nach Anspruch 9 oder 10,
**dadurch gekennzeichnet, dass** die erste Komponente eine höhere dielektrische Festigkeit aufweist als die zweite Komponente.

## Claims

1. Method for filling a pressure vessel (2) of an electrical energy transmission unit (1) with an electrically insulating fluid which comprises at least a first component and a second component, wherein the first component, present in an intermediate store (23), is introduced into the pressure vessel (2),
**characterized in that**
atmospheric air is extracted from the surroundings of the pressure vessel (2) and is treated to form the second component, and **in that** the second component is introduced into the pressure vessel (2).

2. Method according to Claim 1,
**characterized in that**
the first component is introduced into the pressure vessel (2) before the second component.

3. Method according to Claim 1,
**characterized in that**
the second component is introduced into the pressure vessel (2) before the first component.

4. Method according to one of Claims 1 to 3,
**characterized in that**
the first and second components come into contact with one another before being introduced into the pressure vessel (2) .

5. Method according to one of Claims 1 to 4,
**characterized in that**
the first and second components form a binary or ternary gas mixture.

6. Method according to one of Claims 1 to 5,
**characterized in that**
the second component comprises substantially oxygen and nitrogen.

7. Method according to one of Claims 1 to 6,
**characterized in that**
the first component has a higher dielectric strength than the second component.

8. Method according to one of Claims 1 to 7,
**characterized in that**
the first component is a fluorine-containing compound, in particular an organofluorine compound.

9. Service device (9) for filling a pressure vessel (2) of an electrical energy transmission unit (1) with an electrically insulating fluid which comprises at least a first component and a second component, wherein the service device (9) has an admixing point (21) for introduction of the first component of the fluid insulation, present in an intermediate store (23), into the pressure vessel (2),
**characterized in that**
the service device (9) has a treatment cascade (10a, 10b, 10c, 10d, 10e) for preparing the second component, which can be used within the pressure vessel (2) at least partially as electrically insulating fluid insulation, in particular gas insulation, wherein the treatment cascade is designed to extract atmospheric air from the surroundings of the pressure vessel (2) and to treat said atmospheric air to form the second component, wherein the service device (9) is designed to introduce the second component into the pressure vessel (2) .

10. Service device (9) according to Claim 9,
**characterized in that**
the first component is admixed to the treated second component at the admixing point (21).

11. Service device (9) according to Claim 9 or 10,
**characterized in that**
the first component has a higher dielectric strength than the second component.

## Revendications

1. Procédé pour remplir une cuve (2) tenant la pression d'un dispositif (1) de transport d'énergie électrique d'un fluide isolant électriquement, qui a au moins un premier composant et un deuxième composant,
dans lequel on introduit le premier composant dans un accumulateur (23) intermédiaire présent dans la cuve (2) tenant la pression, **caractérisé**
**en ce que** l'on prélève l'air atmosphérique de l'atmosphère de la cuve (2) tenant la pression et on le prépare pour le deuxième composant et en ce que l'on introduit le deuxième composant dans la cuve (2) tenant la pression.

2. Procédé suivant la revendication 1,
**caractérisé en ce que**
l'on introduit le premier composant avant le deuxième composant dans la cuve (2) tenant la pression.

3. Procédé suivant la revendication 1,
**caractérisé en ce que**
l'on introduit le deuxième composants avant le premier composant dans la cuve (2) tenant la pression.

4. Procédé suivant l'une des revendications 1 à 3,
**caractérisé en ce que**
le premier et le deuxième composants entrent en contact entre eux avant une introduction dans la cuve (2) tenant la pression.

5. Procédé suivant l'une des revendications 1 à 4,
**caractérisé en ce que**
le premier et le deuxième composant forment un mélange gazeux binaire ou ternaire.

6. Procédé suivant l'une des revendications 1 à 5,
**caractérisé en ce que**
le deuxième composant a essentiellement de l'oxygène et de l'azote.

7. Procédé suivant l'une des revendications 1 à 6,
**caractérisé en ce que**
le premier composant a une rigidité diélectrique plus grande que le deuxième composant.

8. Procédé suivant l'une des revendications 1 à 7,
**caractérisé en ce que**
le premier composant est un composé fluoré, notamment un composé organofluoré.

9. Appareil (9) de service pour remplir une cuve (2) tenant la pression d'un dispositif (1) de transport d'énergie électrique d'un fluide isolant électriquement, qui a au moins un premier composant et un deuxième composant, dans lequel l'appareil (9) de service a un point (21) d'addition pour l'introduction du premier composant de l'isolant fluide présent dans un récipient (23) intermédiaire dans la cuve (2) tenant la pression,
**caractérisé**
**en ce que** l'appareil (9) de service a une cascade (10a, 10b, 10c,10d, 10e) de préparation pour la confection du deuxième composant, qui peut être utilisé à l'intérieur de la cuve (2) tenant la pression, au moins en partie comme isolant fluide isolant électriquement, notamment isolant gazeux, dans lequel la cascade de préparation est conçue pour prélever de l'air atmosphérique de l'atmosphère de la cuve (2) sous pression pour le préparer pour le deuxième composant, l'appareil (9) de service étant conçu pour l'introduction du deuxième composant dans la cuve (2) tenant la pression.

10. Appareil (9) de service suivant la revendication 9, **caractérisé en ce que**
au point (21) d'addition s'effectue une addition du premier composant au deuxième composant préparé.

11. Appareil (9) de service suivant la revendication 9 ou 10, **caractérisé en ce que**
le premier composant a une rigidité diélectrique plus grande que le deuxième composant.
